# FASCICULE DE BREVET EUROPEEN

(11) **EP 0 655 691 B1**
(45) Date de publication et mention de la délivrance du brevet: **20.09.1995**
(21) Numéro de dépôt: 93402872.1
(22) Date de dépôt: 26.11.1993
(51) Int. Cl.: G06F 13/38, G06F 5/06

(54) **Circuit d'interface, associé à un processeur pour échanger des données numériques en série avec un dispositif périphérique**
Prozessorschnittstellenschaltung zum Austausch von seriellen digitalen Daten mit einem Peripheriegerät
Processor interface circuit for exchanging serial digital data with a peripheral device

(43) Date de publication de la demande: 31.05.1995
(73) Titulaire: SGS-THOMSON MICROELECTRONICS S.A., 94250 Gentilly (FR)
(72) Inventeur: Michalina, Jean-Claude, Cabinet BALLOT-SCHMIT, F-75116 Paris (FR)
(74) Mandataire: Schmit, Christian Norbert Marie

(56) Documents cités:
- EP-A- 0 218 955
- FR-A- 2 636 448

## Description

La présente invention concerne un circuit d'interface, associé à un processeur pour échanger des données numériques en série avec un dispositif périphérique.

Ce circuit est du type interface synchrone, c'est-à-dire que les données numériques sont sous forme de trames binaires émises à la cadence d'un signal d'horloge et repérées par un signal de synchronisation, ces deux signaux étant également transmis entre le processeur et le dispositif périphérique pendant l'échange des données.

Habituellement, le processeur fonctionnant avec des données en parallèle (par exemple par mots de 16 bits), cette fonction d'interface est assurée par un registre de conversion qui est typiquement un registre FIFO (premier entré-premier sorti) ayant un accès série relié au dispositif périphérique et un accès parallèle relié au bus de données du processeur. Dans le cas d'une interface d'entrée, la réception de chaque mot de 16 bits par le processeur nécessite une interruption de l'exécution du programme du processeur pour aller lire ce mot dans le registre de conversion et le stocker dans un registre interne de mémoire vive, avec une production d'adresses et de signaux de commande correspondants, ce qui nécessite environ 10 cycles d'horloge du processeur. Symétriquement, dans le cas d'une interface de sortie, l'émission de chaque mot de 16 bits par le processeur nécessite une interruption du programme pour aller lire ce mot dans un registre interne et l'écrire dans le registre de conversion. Ces tâches d'émission/réception utilisent une part non négligeable de la capacité de traitement du processeur, notamment lorsqu'une trame de données en série inclut plusieurs mots de 16 bits. Cette part est de l'ordre de 15 % dans le cas typique d'un processeur ayant une fréquence d'horloge de 10 MHz relié à un dispositif périphérique permettant un échange de données bidirectionnel en série à une fréquence d'horloge de 10 kHz (par exemple une frontale analogique dans le cas d'une application à un modem).

Le but de la présente invention est de proposer un circuit d'interface qui, associé à un processeur, permette de soulager celui-ci d'un certain nombre de tâches et d'interruptions et donc de mieux tirer parti de ses capacités de traitement.

Selon un premier objet de l'invention, le circuit d'interface associé à un processeur pour échanger des données numériques en série avec un dispositif périphérique, les données numériques étant sous forme de trames binaires émises à la cadence d'un signal d'horloge, repérées par un signal de synchronisation et incluant chacune au moins un mot de données, est caractérisé en ce qu'il comprend
- au moins une mémoire tampon ayant une entrée de données en parallèle, une sortie de données en parallèle, une entrée d'adresses, une entrée de commande d'écriture et une entrée de commande de lecture,
- une première ligne de transfert de données reliée à l'entrée de données de la mémoire tampon,
- une deuxième ligne de transfert de données reliée à la sortie de données de la mémoire tampon,
- un registre de conversion cadencé par le signal d'horloge et ayant un accès série pouvant être relié au dispositif périphérique et un accès parallèle relié à l'une desdites première et deuxième lignes de transfert de données, l'autre ligne de transfert de données étant reliée à un bus de données du processeur,
- des moyens de commande, incluant un compteur recevant le signal d'horloge et le signal de synchronisation, pour produire une première adresse incrémentée sensiblement à la fin de chaque mot échangé en série, un premier signal de commande d'accès en mémoire activé sensiblement à la fin de chaque mot échangé en série, et un signal de sélection de mémoire tampon, et
- des moyens de sélection pour transmettre respectivement ladite première adresse et ledit premier signal de commande d'accès en mémoire à l'entrée d'adresses et à une entrée de commande de la mémoire tampon, ou respectivement une deuxième adresse issue du processeur et un deuxième signal de commande d'accès en mémoire issu du processeur à l'entrée d'adresses et à une entrée de commande de la mémoire tampon, selon l'état du signal de sélection de mémoire tampon.

La mémoire tampon sert à accumuler des trames de données avant leur émission en série ou après leur réception en série. Le transfert des données entre la mémoire tampon et le registre de conversion s'effectue à une cadence qui est liée à la cadence d'émission ou de réception des mots et repérée par le compteur des moyens de commande sur la base des signaux d'horloge et de synchronisation, tandis que le transfert des données entre la mémoire tampon et le processeur peut s'effectuer de manière regroupée et à la cadence de l'horloge du processeur, c'est-à-dire en général beaucoup plus rapidement. Le transfert d'un groupe de données nécessite une seule interruption du processeur et un nombre d'instructions moindre que les transferts successifs de mots individuels.

Dans une réalisation avantageuse de l'invention, le circuit d'interface comprend deux mémoires tampon ayant chacune une entrée de données en parallèle reliée à la première ligne de transfert de données, une sortie de données en parallèle reliée à la deuxième ligne de transfert de données, une entrée d'adresses, une entrée de commande d'écriture et une entrée de commande de lecture, et les moyens de sélection sont agencés pour transmettre respectivement ladite première adresse et ledit premier signal de commande d'accès en mémoire à l'entrée d'adresses et à une entrée de commande d'une des mémoires tampon sélectionnée en fonction du signal de sélection de mémoire tampon, et pour transmettre respectivement la deuxième adresse issue du processeur et le deuxième signal de commande d'accès en mémoire issu du processeur à l'entrée d'adresses et à une entrée de commande de l'autre mémoire tampon.

Cette utilisation de deux mémoires tampon et des moyens de sélection est particulièrement avantageuse. Dans le cas d'un circuit d'entrée, elle permet au circuit de continuer à recevoir des données dans une mémoire tampon pendant que le processeur est en train de lire des données précédentes dans l'autre mémoire tampon. Dans le cas d'un circuit de sortie, cette utilisation permet au processeur d'écrire des données dans une mémoire tampon pendant que d'autres données précédemment écrites dans l'autre mémoire tampon sont émises vers le dispositif périphérique.

Le circuit d'interface peut être agencé pour recevoir les signaux d'horloge et de synchronisation du dispositif périphérique ou pour générer lui-même ces signaux à partir d'un autre signal d'horloge de fréquence supérieure issu du processeur.

Dans une version préférée du circuit, les moyens de commande sont agencés pour modifier l'état du signal de sélection de mémoire tampon lorsqu'un nombre de trames correspondant à la capacité d'une mémoire tampon ont été échangées. Le processeur peut ainsi lire ou écrire successivement des groupes de données qui comportent toujours le même nombre de trames (correspondant à la capacité d'une mémoire tampon). Les secondes adresses, générées par le processeur pour ces lectures ou ces écritures, sont en outre toujours les mêmes.

Un second objet de l'invention vise un circuit d'interface associé à un processeur pour un échange de données numériques bidirectionnel entre le processeur et un dispositif périphérique, les données étant sous forme de trames binaires émises à la cadence d'un signal d'horloge, repérées par un signal de synchronisation et incluant chacune au moins un mot de données, caractérisé en ce qu'il comprend :
- au moins une mémoire tampon d'émission et au moins une mémoire tampon de réception, chacune de ces mémoires tampon ayant une entrée de données en parallèle, une sortie de données en parallèle, une entrée d'adresses, une entrée de commande d'écriture et une entrée de commande de lecture, la sortie de données de la mémoire tampon de réception et l'entrée de données de la mémoire tampon d'émission étant reliées à un bus de données du processeur ;
- un registre de conversion parallèle/série cadencé par le signal d'horloge et ayant une sortie série pouvant être reliée au dispositif périphérique et une entrée parallèle reliée à la sortie de données de la mémoire tampon d'émission,
- un registre de conversion série/parallèle cadencé par le signal d'horloge et ayant une entrée série pouvant être reliée au dispositif périphérique et une sortie parallèle reliée à l'entrée de données de la mémoire tampon de réception,
- des moyens de commande, incluant un compteur recevant le signal d'horloge et le signal de synchronisation, pour produire une première adresse de lecture incrémentée sensiblement à la fin de chaque mot émis en série vers le dispositif périphérique, un premier signal de commande de lecture activé sensiblement à la fin de chaque mot émis en série vers le dispositif périphérique, une première adresse d'écriture incrémentée sensiblement à la fin de chaque mot reçu en série depuis le dispositif périphérique, un premier signal de commande d'écriture activé sensiblement à la fin de chaque mot reçu en série depuis le dispositif périphérique, un signal de sélection de mémoire tampon d'émission, et un signal de sélection de mémoire tampon de réception,
- des moyens de sélection d'émission pour transmettre respectivement ladite première adresse de lecture et ledit premier signal de commande de lecture à l'entrée d'adresses et à l'entrée de commande de lecture de la mémoire tampon d'émission, ou respectivement une deuxième adresse d'écriture issue du processeur et un deuxième signal de commande d'écriture issu du processeur à l'entrée d'adresses et à l'entrée de commande d'écriture de la mémoire tampon d'émission, selon l'état du signal de sélection de mémoire tampon d'émission, et
- des moyens de sélection de réception pour transmettre respectivement ladite première adresse d'écriture et ledit premier signal de commande d'écriture à l'entrée d'adresses et à l'entrée de commande d'écriture de la mémoire tampon de réception, ou respectivement une deuxième adresse de lecture issue du processeur et un deuxième signal de commande de lecture issu du processeur à l'entrée d'adresses et à l'entrée de commande de lecture de la mémoire tampon de réception, selon l'état du signal de sélection de mémoire tampon de réception.

Ce circuit d'interface bidirectionnelle peut être vu comme la juxtaposition d'un circuit d'entrée et d'un circuit de sortie selon le premier objet de l'invention, avec en outre l'avantage que les moyens de commande pour l'émission et pour la réception peuvent être au moins partiellement confondus.

Dans une version préférée de ce circuit d'interface bidirectionnelle, ledit premier signal de commande d'écriture et ledit premier signal de commande de lecture sont un seul et même signal, et ladite première adresse d'écriture est identique à ladite première adresse de lecture décalée de sensiblement une demi-période du signal d'horloge. De cette façon, l'émission de données en série vers le dispositif périphérique et la réception de données en série depuis le dispositif périphérique peuvent être parfaitement synchrones et en phase.

De préférence, la deuxième adresse d'écriture et la deuxième adresse de lecture sont une seule et même adresse issue du processeur. Le même bus d'adresses du processeur est alors utilisé pour l'émission et pour la réception de données, ce qui n'empêche pas le processeur de pouvoir à la fois lire dans les mémoires tampon de réception et écrire dans les mémoires tampon d'émission : il suffit d'attribuer les mêmes adresses aux emplacements des mémoires tampon d'émission et de réception.

D'autres particularités et avantages de la présente invention apparaîtront dans la description détaillée ci-après d'un exemple de réalisation préféré et non limitatif, lue conjointement aux dessins annexés, dans lesquels :
- la figure 1 est un schéma d'un circuit d'interface bidirectionnelle selon l'invention ;
- la figure 2 est un chronogramme de différents signaux servant au fonctionnement du circuit de la figure 1 ; et
- la figure 3 est un chronogramme illustrant le fonctionnement d'une partie du circuit de la figure 1.

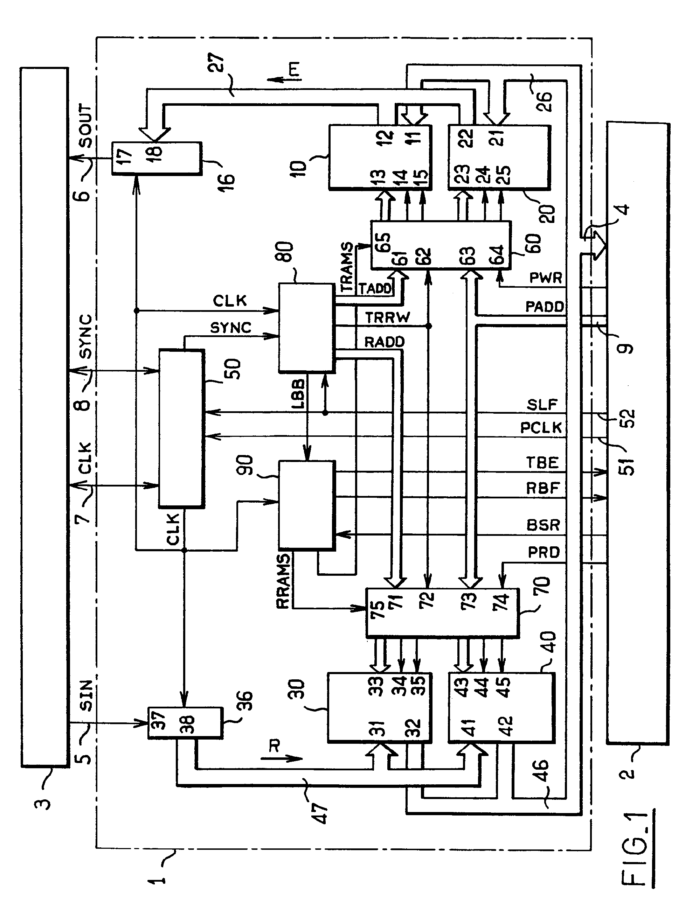

La figure 1 montre un circuit d'interface 1 selon l'invention associé à un processeur 2 (c'est-à-dire faisant partie d'une même puce à circuit intégré) et relié à un dispositif périphérique 3. Les données sont échangées par le processeur 2 via un bus de données à 16 bits 4, sont reçues du dispositif périphérique 3 par une ligne série 5 et sont émises vers le dispositif périphérique 3 par une ligne série 6. Entre le circuit 1 et le dispositif périphérique 3, les données échangées sont sous forme de trames correspondant chacune à un ou plusieurs mots de 16 bits transmis sur le bus de données 4, émises à la cadence d'un signal d'horloge CLK, et repérées par un signal de synchronisation SYNC.

Les signaux d'horloge CLK et de synchronisation SYNC sont partagés entre le circuit 1 et le dispositif périphérique 3 par l'intermédiaire de lignes respectives 7, 8. Ils peuvent être soit reçus du dispositif périphérique 3 soit produits par un générateur 50 inclus dans le circuit 1 sur la base du signal d'horloge PCLK reçu du processeur 2 par une ligne d'horloge 51. Le signal PCLK est issu de l'horloge propre du processeur 2 et a normalement une fréquence nettement supérieure à celle du signal d'horloge CLK servant aux échanges de données en série. Le générateur 50 reçoit en outre du processeur 2 des signaux de configuration, désignés collectivement par la référence SLF à la figure 1 et transmis par des lignes 52. Ces signaux de configuration SLF sont utilisés pour déterminer le rapport des fréquences entre les signaux d'horloge PCLK et CLK, pour mettre en forme les signaux d'horloge et de synchronisation produits par le générateur 50 et pour sélectionner la source des signaux CLK, SYNC utilisés (dispositif périphérique 3 ou générateur 50).

Le générateur, représenté schématiquement en 50, applique les signaux d'horloge CLK et de synchronisation SYNC sélectionnés au circuit 1 ainsi qu'au dispositif périphérique 3 lorsque celui-ci n'est pas sélectionné comme source des signaux CLK et SYNC. Le circuit 1 peut ainsi, en modifiant les signaux de configuration SLF, être utilisé pour échanger des données avec différents types de dispositifs périphériques.

A titre d'exemple, le processeur 2 peut être du type ST18933 commercialisé par la société SGS-Thomson Microelectronics, et le dispositif périphérique 3 peut, dans le cas d'une application à un modem, être une frontale analogique du type ST7543 commercialisée par la société SGS-Thomson Microelectronics. Dans l'exemple de ce dispositif périphérique, une trame consiste en quatre mots de 16 bits, le début d'une trame est repéré par une impulsion de niveau logique 1 dans le signal SYNC, les signaux CLK et SYNC sont reçus depuis le dispositif périphérique, les données reçues sur la ligne 5 sont échantillonnées sur le front descendant du signal d'horloge CLK, et les données sont émises sur la ligne 6 sur Le front montant du signal d'horloge CLK. Le processeur délivrera alors sur la ligne 52 des signaux de configuration appropriés SLF.

Le circuit d'interface 1 comporte un registre de conversion parallèle/série 16 et un registre de conversion série/parallèle 36, qui sont deux registres classiques de type FIFO à 16 bits, cadencés par le signal d'horloge CLK. Le registre 16, servant à l'émission de données, a une entrée parallèle 18 reliée à une ligne de transfert de données 27 et une sortie série 17 pouvant être reliée au dispositif périphérique 3 par la ligne 6. Le registre 36, servant à la réception de données, a une entrée série 37 pouvant être reliée au dispositif périphérique 3 par la ligne 5 et une sortie parallèle 38 reliée à une ligne de transfert de données 47.

Le circuit d'interface 1 comporte en outre deux mémoires tampon d'émission 10, 20 et deux mémoires tampon de réception 30, 40 ayant chacune : une entrée de données en parallèle sur 16 bits 11, 21, 31, 41 ; une sortie de données en parallèle sur 16 bits 12, 22, 32, 42 ; une entrée d'adresses sur 4 bits 13, 23, 33, 43 ; une entrée de commande d'écriture 14, 24, 34, 44 ; et une entrée de commande de lecture 15, 25, 35, 45. Les sorties de données 12, 22 des mémoires tampon d'émission 10, 20 sont reliées à la ligne de transfert de données 27 et donc à l'entrée parallèle 18 du registre 16. Les entrées de données 11, 21 des mémoires tampon d'émission 10, 20 sont reliées à une autre ligne de transfert de données 26, elle-même reliée au bus de données 4 du processeur 2. Les entrées de données 31, 41 des mémoires tampon de réception sont reliées à la ligne de transfert de données 47 et donc à la sortie parallèle 38 du registre 36. Les sorties de données 32, 42 des mémoires tampon de réception 30, 40 sont reliées à une ligne de transfert de données 46 elle-même reliée au bus de données 4 du processeur 2.

Dans l'exemple décrit ici, chacune des mémoires 10, 20, 30, 40 a une capacité de 16 mots de 16 bits (soit 4 trames de 4 x 16 bits) dont les emplacements sont repérés par l'adresse de 4 bits reçue à l'entrée 13, 23, 33, 43.

Les entrées d'adresses 13, 23 et les entrées de commande 14, 15, 24, 25 des mémoires tampon d'émission 10, 20 sont respectivement reliées à des sorties correspondantes d'un circuit de sélection d'émission 60. Le circuit de sélection 60 a en outre une entrée sur 4 bits 61 pouvant recevoir une première adresse de lecture TADD, une entrée 62 pouvant recevoir un signal de commande de lecture TRRW, une entrée sur 4 bits 63 reliée au bus d'adresses 9 du processeur 2 pour recevoir une adresse d'écriture PADD issue du processeur 2, une entrée 64 pouvant recevoir un signal de commande d'écriture PWR issu du processeur 2, et une entrée 65 pouvant recevoir un signal de sélection de mémoire tampon d'émission TRAMS.

Le circuit de sélection 60 permet de sélectionner une des mémoires tampon d'émission 10, 20 pour fournir des données au registre 16 en fonction du signal de sélection de mémoire tampon d'émission TRAMS. Lorsque TRAMS est au niveau logique 0, la mémoire 10 est sélectionnée et le circuit 60 transmet l'adresse de lecture TADD à l'entrée d'adresses 13 de la mémoire 10 et le signal de commande de lecture TRRW à l'entrée de commande de lecture 15 de la mémoire 10, tandis qu'il transmet l'adresse d'écriture PADD à l'entrée d'adresses 23 de l'autre mémoire 20 et le signal de commande d'écriture PWR à l'entrée de commande d'écriture 24 de l'autre mémoire 20. Lorsque TRAMS est au niveau logique 1, la mémoire 20 est sélectionnée et le circuit 60 transmet l'adresse de lecture TADD à l'entrée d'adresses 23 de la mémoire 20 et le signal de commande de lecture 25 de la mémoire 20, tandis qu'il transmet l'adresse d'écriture PADD à l'entrée d'adresses 13 de l'autre mémoire 10 et le signal de commande d'écriture PWR à l'entrée de commande d'écriture 14 de l'autre mémoire 10.

Les entrées d'adresses 33, 43 et les entrées de commande 34, 35, 44, 45 des mémoires tampon de réception 30, 40 sont respectivement reliées à des sorties correspondantes d'un circuit de sélection de réception 70. Le circuit de sélection 70 a en outre une entrée sur 4 bits 71 pouvant recevoir une première adresse d'écriture RADD, une entrée 72 pouvant recevoir un signal de commande d'écriture TRRW, une entrée sur 4 bits 73 reliée au bus d'adresses 9 du processeur 2 pour recevoir une adresse de lecture PADD issue du processeur 2, une entrée 74 pouvant recevoir un signal de commande de lecture PRD issu du processeur 2, et une entrée 75 pouvant recevoir un signal de sélection de mémoire tampon de réception RRAMS.

Le circuit de sélection 70 est analogue au circuit 60 précédemment décrit. Il permet de sélectionner une des mémoires tampon de réception 30, 40 pour recevoir des données du registre 36 en fonction du signal de sélection de mémoire tampon de réception RRAMS. Lorsque RRAMS est au niveau logique 0, la mémoire 30 est sélectionnée et le circuit 70 transmet l'adresse d'écriture RADD à l'entrée d'adresses 33 de la mémoire 30 et le signal de commande d'écriture TRRW à l'entrée de commande d'écriture 34 de la mémoire 30, tandis qu'il transmet l'adresse de lecture PADD à l'entrée d'adresses 43 de l'autre mémoire 40 et le signal de commande de lecture PRD à l'entrée de commande de lecture 45 de l'autre mémoire 40. Lorsque RRAMS est au niveau logique 1, la mémoire 40 est sélectionnée et le circuit 70 transmet l'adresse d'écriture RADD à l'entrée d'adresses 43 de la mémoire 40 et le signal de commande d'écriture TRRW à l'entrée de commande d'écriture 44 de la mémoire 40, tandis qu'il transmet l'adresse de lecture PADD à l'entrée d'adresses 33 de l'autre mémoire 30 et le signal de commande de lecture PRD à l'entrée de commande de lecture 35 de l'autre mémoire 30.

On constate que le signal de commande de lecture destiné aux mémoires tampon d'émission 10, 20 et le signal de commande d'écriture destiné aux mémoires tampon de réception 30, 40 sont un seul et même signal TRRW. Ce signal est actif au niveau bas (TTRW = 0) et inactif au niveau haut (TRRW = 1). En outre, l'adresse d'écriture destinée aux mémoires tampon d'émission 10, 20 et l'adresse de lecture destinée aux mémoires tampon de réception 30, 40 sont une seule et même adresse PADD délivrée par le processeur 2 sur son bus d'adresses 9.

Le circuit d'interface 1 comporte encore des moyens de commande incluant un compteur 80 et un contrôleur 90. Le compteur 80 reçoit le signal d'horloge CLK et le signal de synchronisation SYNC et produit, en fonction de ces signaux CLK, SYNC, le signal de commande de lecture/écriture TRRW adressé aux entrées 62, 72 des circuits de sélection 60, 70, l'adresse de lecture TADD adressée à l'entrée 61 du circuit de sélection 60, et l'adresse d'écriture RADD adressée à l'entrée 71 du circuit de sélection 70. Le signal TRRW est activé à la fin de chaque mot de 16 bits émis ou reçu en série par le circuit d'interface 1. L'adresse de lecture TADD est incrémentée d'une unité à la fin de chaque mot émis en série vers le dispositif périphérique 3. L'adresse d'écriture RADD est incrémentée à la fin de chaque mot reçu en série du dispositif périphérique 3. Pour repérer la fin des mots, le compteur 80 compte quatre fois seize cycles du signal d'horloge CLK après chaque impulsion du signal de synchronisation SYNC. Pour connaître la forme d'onde des signaux CLK et SYNC, le nombre de mots par trame ou d'autres paramètres pouvant varier selon l'application du circuit d'interface, le compteur 80 a une entrée reliée à la ligne 52 pour recevoir du processeur 2 les signaux de configuration SLF.

Pour rendre l'émission et la réception de trames en série parfaitement synchrones et en phase, le même signal de commande TRRW est utilisé pour lire dans les mémoires 10, 20 et pour écrire dans les mémoires 30, 40 comme exposé précédemment et, en outre, l'adresse d'écriture RADD est identique à l'adresse de lecture TADD décalée d'environ une demi-période du signal d'horloge CLK.

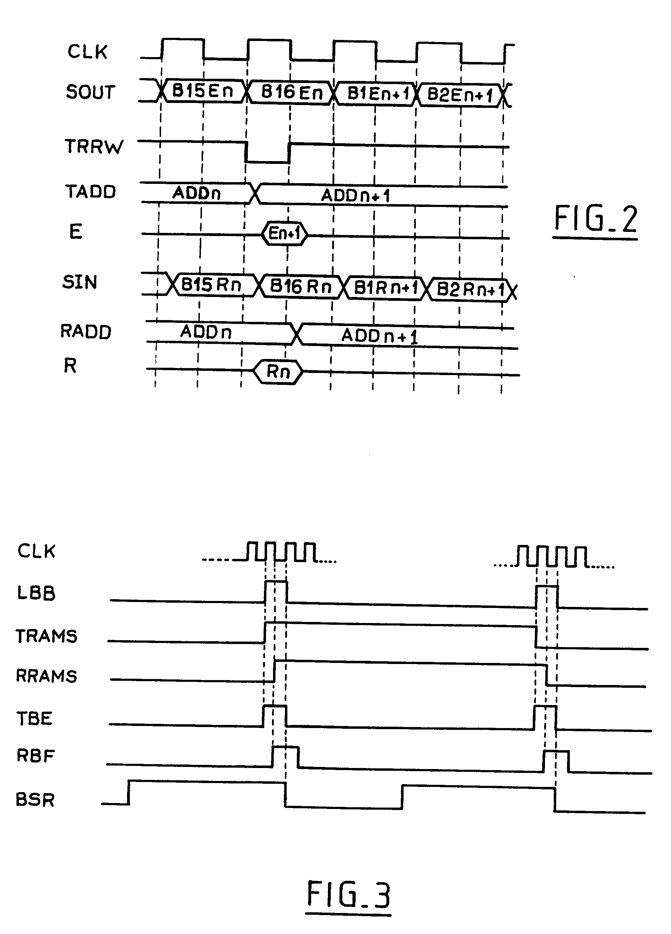

Le fonctionnement correspondant du compteur 80 est illustré par les chronogrammes de la figure 2. Le signal de sortie SOUT émis sur la ligne 6 présente la succession des bits de données B15En, B16En, B1En+1, B2En+1... à la cadence du signal d'horloge CLK, et le signal d'entrée SIN reçu sur la ligne 5 présente la succession des bits de données B15Rn, B16Rn, B1Rn+1, B2Rn+1... à la cadence du signal d'horloge CLK, les mots émis En, En+1 et les mots reçus Rn, Rn+1 étant en phase sur leurs lignes respectives 6, 5. Lorsque le compteur 80 a détecté le dernier bit B16En d'un mot de 16 bits émis En, il produit une impulsion de niveau logique 0 du signal TRRW pendant le demi-cycle CLK = 1, et il incrémente en même temps d'une unité l'adresse de lecture TADD. Le signal TRRW et l'adresse de lecture TADD sont transmis par le circuit de sélection 60 à l'entrée de commande de lecture 15, 25 et à l'entrée d'adresses 13, 23 d'une des mémoires tampon d'émission 10, 20 contenant le prochain mot à émettre En+1. Ce mot En+1 est présenté sur la ligne 27 (ligne E à la figure 2), puis verrouillé dans le registre 16 au moment du front montant du signal TRRW en vue de l'émission en série de ses bits B1En+1, B2En+1, que commandent les cycles suivants du signal d'horloge CLK.

Lorsque le compteur 80 a détecté le dernier bit B16Rn d'un mot de 16 bits reçu Rn, il incrémente d'une unité l'adresse d'écriture RADD après que le signal d'horloge CLK est revenu au niveau 0 (c'est-à-dire une demi-période après l'incrémentation de l'adresse de lecture TADD). Ainsi, l'adresse d'écriture RADD n'est pas encore incrémentée au moment du front montant du signal de commande TRRW. Le signal TRRW et l'adresse d'écriture RADD sont transmis par le circuit de sélection 70 à l'entrée de commande d'écriture 34, 44 et à l'entrée d'adresses 33, 43 d'une des mémoires tampon de réception 30, 40 ayant un emplacement disponible pour recevoir le mot de 16 bits Rn qui vient d'être reçu et qui est temporairement présent dans le registre 36. Ce mot Rn est présenté sur la ligne 47 (ligne R à la figure 2), puis stocké dans la mémoire 30, 40 au moment du front montant du signal TRRW à l'adresse RADD = ADDn qui n'a pas encore été incrémentée et qui correspond donc à l'adresse TADD = ADDn qui était celle dans la mémoire 10, 20 du mot En qui a été émis sur la ligne 6 en même temps que ce mot Rn était reçu sur la ligne 5. Ainsi on voit que les mots En, Rn ; En+1, Rn+1 qui sont émis et reçus en phase sur les lignes 6, 5 sont également stockés à des emplacements correspondants des mémoires tampon d'émission et de réception.

Le compteur 80 produit également un signal LBB fourni au contrôleur 90, qui présente une impulsion de niveau logique 1 et de durée égale à une période du signal d'horloge CLK lorsqu'un nombre de trames correspondant à la capacité d'une des mémoires tampon 10, 20, 30, 40 (quatre dans l'exemple décrit ici) ont été échangées en série. Le front montant de l'impulsion du signal LBB coïncide avec le front descendant de l'impulsion d'activation du signal de commande TRRW résultant de la détection du dernier bit du dernier mot de la succession de trames dont le nombre correspond à la capacité d'une mémoire tampon 10, 20, 30, 40. Pour produire la signal LBB, le compteur 80 compte donc les trames repérées par le signal de synchronisation SYNC. Le nombre de trames par mémoire peut varier selon l'application du circuit d'interface et peut être indiqué au compteur 80 au moyen des signaux de configuration SLF.

Le contrôleur 90 sert notamment à produire les signaux de sélection de mémoire tampon TRAMS et RRAMS. Son fonctionnement est illustré par les chronogrammes de la figure 3. Le contrôleur 90 reçoit le signal d'horloge CLK, le signal LBB issu du compteur 80 et un signal binaire de validation BSR issu du processeur 2. Le contrôleur 90 change l'état du signal de sélection de mémoire tampon d'émission TRAMS à chaque front montant du signal LBB, c'est-à-dire sensiblement en même temps que le compteur 80 incrémente l'adresse de lecture TADD en réponse à l'émission du dernier mot de la succession de trames sur la ligne 6. Le contrôleur 90 change l'état du signal de sélection de mémoire tampon de réception RRAMS une demi-période du signal d'horloge CLK après avoir changé l'état de l'autre signal de sélection TRAMS, c'est-à-dire sensiblement en même temps que le compteur 80 incrémente l'adresse d'écriture RADD en réponse à la réception du dernier mot de la succession de trames sur la ligne 5. Ce décalage d'une demi-période entre les modifications des signaux TRAMS et RRAMS est réalisé, pour la même raison que le décalage entre les incrémentations des adresses TADD et RADD, afin d'assurer une émission et une réception de trames en phase.

Lorsque TRAMS est au niveau 0, les mots de données présents dans la mémoire tampon d'émission 10 sont adressés successivement au registre 16 (impulsions du signal de commande TRRW et incrémentations de l'adresse de lecture TADD), et émis en série sur la ligne 6. Une fois que tout le contenu de la mémoire 10 a ainsi été émis, l'impulsion du signal LBB provoque une modification du signal de sélection de mémoire tampon d'émission TRAMS, de sorte que les prochains mots à émettre seront lus dans l'autre mémoire tampon d'émission 20. En même temps qu'il modifie le signal TRAMS, le contrôleur 90 adresse au processeur 2 un signal de fin de transmission TBE (figures 1 et 3) pour lui indiquer que tout le contenu de la mémoire 10 a été émis. Le processeur 2 peut alors écrire de nouvelles données à émettre dans cette mémoire 10 (en produisant des adresses sur le bus 9 et les données sur le bus 4 et en délivrant des impulsions du signal de commande d'écriture PWR) pendant que le circuit d'interface émet en série les mots contenus dans l'autre mémoire tampon d'émission 20, ce qu'autorise l'état TRAMS = 1 du signal de sélection de mémoire tampon d'émission. La transition entre les états 1 et 0 du signal TRAMS s'effectue de façon tout à fait analogue.

Lorsque RRAMS est au niveau 0, les mots de données reçus en série par le registre 36 sont stockés successivement dans la mémoire tampon de réception 30 (impulsions du signal de commande TRRW et incrémentations de l'adresse d'écriture RADD). Une fois que la mémoire 30 a ainsi été complètement remplie par des mots reçus, l'impulsion du signal LBB provoque une modification du signal de sélection de mémoire tampon de réception RRAMS, de sorte que les prochains mots reçus seront stockés dans l'autre mémoire tampon de réception 40. En même temps qu'il modifie le signal RRAMS, le contrôleur 90 adresse au processeur 2 un signal de fin de transmission RBF (figures 1 et 3) pour lui indiquer que la mémoire 30 a été complètement remplie. Le processeur peut alors lire les données présentes dans cette mémoire 30 (en produisant des adresses sur le bus 9 et en délivrant des impulsions du signal de commande de lecture PRD) pendant que le circuit d'interface reçoit en série d'autres mots qu'il stocke dans l'autre mémoire tampon de réception 40, ce qu'autorise l'état RRAMS = 1 du signal de sélection de mémoire tampon de réception. La transition entre les états 0 et 1 du signal RRAMS s'effectue de façon tout à fait analogue.

Pendant que le processeur 2 est en train de lire ou d'écrire des mots de données dans une des mémoires tampon 10, 20, 30, 40, il met le signal de validation BSR à l'état logique 0. Lorsqu'il a terminé d'écrire et de lire dans les mémoires 10, 20, 30, 40, il met le signal de validation BSR à l'état logique 1. Le contrôleur 90 est agencé pour ne modifier les signaux TRAMS et RRAMS que si le signal de validation BSR est à l'état 1 (figure 3), ce qui correspond à une situation normale compte tenu de la cadence de traitement du processeur qui est nettement supérieure à celle de l'échange des données en série.

On a décrit ci-dessus en référence aux figures 1 à 3 un circuit d'interface bidirectionnelle selon l'invention. Le circuit selon l'invention peut également être réalisé dans une version monodirectionnelle (émission ou réception). En référence à la figure 1, un circuit d'émission peut être simplement obtenu en supprimant le registre série/parallèle 36, les mémoires tampon de réception 30, 40, le circuit de sélection de réception 70 et les connexions correspondantes, la production de l'adresse RADD et des signaux RRAMS et RBF par les moyens de commande 80, 90 étant alors inutile. De même, un circuit de réception peut être simplement obtenu en supprimant le registre parallèle/série 6, les mémoires tampon d'émission 10, 20, le circuit de sélection d'émission 60 et les connexions correspondantes, la production de l'adresse TADD et des signaux TRAMS et TBE par les moyens de commande 80, 90 étant alors inutile. On peut également réaliser un échange monodirectionnel en utilisant tout le circuit représenté à la figure 1, et en ne reliant que l'une des lignes série 5, 6 au dispositif périphérique 3.

Bien qu'on ait décrit l'invention en référence à un exemple de réalisation préféré, on comprendra que cet exemple n'est pas limitatif et que diverses modifications peuvent lui être apportées sans sortir du cadre de l'invention.

## Revendications

1. Circuit d'interface (1) associé à un processeur (2) pour échanger des données numériques en série avec un dispositif périphérique (3), les données numériques étant sous forme de trames binaires émises à la cadence d'un signal d'horloge (CLK), repérées par un signal de synchronisation (SYNC) et incluant chacune au moins un mot de données, caractérisé en ce qu'il comprend
- au moins une mémoire tampon (10, 20 ; 30, 40) ayant une entrée de données en parallèle (11, 21 ; 31, 41), une sortie de données en parallèle (12, 22 ; 32, 42), une entrée d'adresses (13, 23 ; 33, 43), une entrée de commande d'écriture (14, 24 ; 34, 44) et une entrée de commande de lecture (15, 25 ; 35, 45),
- une première ligne de transfert de données (26 ; 47) reliée à l'entrée de données (11, 21 ; 31, 41) de la mémoire tampon,
- une deuxième ligne de transfert de données (27 ; 46) reliée à la sortie de données (12, 22 ; 32, 42) de la mémoire tampon,
- un registre de conversion (16 ; 36) cadencé par le signal d'horloge (CLK) et ayant un accès série (17 ; 37) pouvant être relié au dispositif périphérique (3) et un accès parallèle (18 ; 38) relié à l'une (27 ; 47) desdites première et deuxième lignes de transfert de données, l'autre ligne de transfert de données (26 ; 46) étant reliée à un bus de données (4) du processeur (2),
- des moyens de commande (80, 90), incluant un compteur (80) recevant le signal d'horloge (CLK) et le signal de synchronisation (SYNC), pour produire une première adresse (TADD ; RADD) incrémentée sensiblement à la fin de chaque mot échangé en série, un premier signal de commande d'accès en mémoire (TRRW) activé sensiblement à la fin de chaque mot échangé en série, et un signal de sélection de mémoire tampon (TRAMS ; RRAMS), et
- des moyens de sélection (60 ; 70) pour transmettre respectivement ladite première adresse (TADD ; RADD) et ledit premier signal de commande d'accès en mémoire (TRRW) à l'entrée d'adresses (13, 23 ; 33, 43) et à une entrée de commande (15, 25 ; 34, 44) de la mémoire tampon, ou respectivement une deuxième adresse (PADD) issue du processeur (2) et un deuxième signal de commande d'accès en mémoire (PWR ; PRD) issu du processeur (2) à l'entrée d'adresses (13, 23 ; 33, 43) et à une entrée de commande (14, 24 ; 35, 45) de la mémoire tampon, selon l'état du signal de sélection de mémoire tampon (TRAMS ; RRAMS).

2. Circuit d'interface conforme à la revendication 1, caractérisé en ce qu'il comprend deux mémoires tampon (10, 20 ; 30, 40) ayant chacune une entrée de données en parallèle (11, 21 ; 31, 41) reliée à la première ligne de transfert de données (26 ; 47), une sortie de données en parallèle (12, 22 ; 32, 42) reliée à la deuxième ligne de transfert de données (27 ; 46), une entrée d'adresses (13, 23 ; 33, 43), une entrée de commande d'écriture (14, 24 ; 34, 44) et une entrée de commande de lecture (15, 25 ; 35, 45), et en ce que les moyens de sélection (60 ; 70) sont agencés pour transmettre respectivement ladite première adresse (TADD ; RADD) et ledit premier signal de commande d'accès en mémoire (TRRW) à l'entrée d'adresses (13, 23 ; 33, 43) et à une entrée de commande (15, 25 ; 34, 44) d'une des mémoires tampon sélectionnée en fonction du signal de sélection de mémoire tampon (TRAMS ; RRAMS), et pour transmettre respectivement la deuxième adresse (PADD) issue du processeur (2) et le deuxième signal de commande d'accès en mémoire (PWR ; PRD) issu du processeur (2) à l'entrée d'adresses (13, 23 ; 33, 43) et à une entrée de commande (14, 24 ; 35, 45) de l'autre mémoire tampon.

3. Circuit d'interface conforme à l'une des revendications 1 ou 2, caractérisé en ce que les moyens de commande (80, 90) sont agencés pour modifier l'état du signal de sélection de mémoire tampon (TRAMS ; RRAMS) lorsqu'un nombre de trames correspondant à la capacité d'une mémoire tampon (10, 20 ; 30, 40) ont été échangées.

4. Circuit d'interface conforme à la revendication 3, caractérisé en ce que les moyens de commande (80, 90) reçoivent un signal de validation (BSR) issu du processeur (2) et sont agencés pour autoriser la modification de l'état du signal de sélection de mémoire tampon (TRAMS ; RRAMS) lorsque ce signal de validation (BSR) est à un état prédéterminé.

5. Circuit d'interface conforme à l'une des revendications 3 ou 4, caractérisé en ce que les moyens de commande (80, 90) sont agencés pour adresser au processeur (2) un signal de fin de transmission (TBE ; RBF) sensiblement en même temps qu'ils modifient l'état du signal de sélection de mémoire tampon (TRAMS ; RRAMS).

6. Circuit d'interface conforme à l'une des revendications 1 à 5, caractérisé en ce qu'il comprend des moyens (50) pour générer le signal d'horloge (CLK) et le signal de synchronisation (SYNC) à partir d'un autre signal d'horloge (PCLK) de fréquence supérieure issu du processeur (2).

7. Circuit d'interface conforme à l'une des revendications 1 à 6, pour émettre des données en série depuis le processeur (2) vers le dispositif périphérique (3), caractérisé en ce que ladite deuxième ligne de transfert de données (27) est reliée à l'accès parallèle (18) du registre de conversion (16), tandis que ladite première ligne de transfert de données (26) est reliée au bus de données (4) du processeur, en ce que ledit premier signal de commande d'accès en mémoire (TRRW) est transmis sélectivement par les moyens de sélection (60) à l'entrée de commande de lecture (15, 25) de la mémoire tampon (10, 20) et en ce que ledit deuxième signal de commande d'accès en mémoire (PWR) est transmis sélectivement par les moyens de sélection (60) à l'entrée de commande d'écriture (14, 24) de la mémoire tampon (10, 20).

8. Circuit d'interface conforme à l'une des revendications 1 à 6, pour recevoir au niveau du processeur (2) des données émises en série par le dispositif périphérique (3), caractérisé en ce que ladite première ligne de transfert de données (47) est reliée à l'accès parallèle (38) du registre de conversion (36), tandis que ladite deuxième ligne de transfert de données (46) est reliée au bus de données (4) du processeur, en ce que ledit premier signal de commande d'accès en mémoire (TRRW) est transmis sélectivement par les moyens de sélection (70) à l'entrée de commande d'écriture (34, 44) de la mémoire tampon (30, 40), et en ce que ledit deuxième signal de commande d'accès en mémoire (PRD) est transmis sélectivement par les moyens de sélection (70) à l'entrée de commande de lecture (35, 45) de la mémoire tampon (30, 40).

9. Circuit d'interface (1) associé à un processeur (2) pour un échange de données numériques bidirectionnel entre le processeur et un dispositif périphérique (3), les données étant sous forme de trames binaires émises à la cadence d'un signal d'horloge (CLK), repérées par un signal de synchronisation (SYNC) et incluant chacune au moins un mot de données, caractérisé en ce qu'il comprend :
- au moins une mémoire tampon d'émission (10, 20) et au moins une mémoire tampon de réception (30, 40), chacune de ces mémoires tampon ayant une entrée de données en parallèle (11, 21, 31, 41), une sortie de données en parallèle (12, 22, 32, 42), une entrée d'adresses (13, 23 ; 33, 43), une entrée de commande d'écriture (14, 24, 34, 44) et une entrée de commande de lecture (15, 25, 35, 45), la sortie de données (32, 42) de la mémoire tampon de réception et l'entrée de données (11, 21) de la mémoire tampon d'émission étant reliées à un bus de données (4) du processeur ;
- un registre de conversion parallèle/série (16) cadencé par le signal d'horloge (CLK) et ayant une sortie série (17) pouvant être reliée au dispositif périphérique (3) et une entrée parallèle (18) reliée à la sortie de données (12, 22) de la mémoire tampon d'émission,
- un registre de conversion série/parallèle (36) cadencé par le signal d'horloge (CLK) et ayant une entrée série (37) pouvant être reliée au dispositif périphérique (3) et une sortie parallèle (38) reliée à l'entrée de données (31, 41) de la mémoire tampon de réception,
- des moyens de commande (80, 90), incluant un compteur (80) recevant le signal d'horloge (CLK) et le signal de synchronisation (SYNC), pour produire une première adresse de lecture (TADD) incrémentée sensiblement à la fin de chaque mot émis en série vers le dispositif périphérique, un premier signal de commande de lecture (TRRW) activé sensiblement à la fin de chaque mot émis en série vers le dispositif périphérique, une première adresse d'écriture (RADD) incrémentée sensiblement à la fin de chaque mot reçu en série depuis le dispositif périphérique, un premier signal de commande d'écriture (TRRW) activé sensiblement à la fin de chaque mot reçu en série depuis le dispositif périphérique, un signal de sélection de mémoire tampon d'émission (TRAMS), et un signal de sélection de mémoire tampon de réception (RRAMS),
- des moyens de sélection d'émission (60) pour transmettre respectivement ladite première adresse de lecture (TADD) et ledit premier signal de commande de lecture (TRRW) à l'entrée d'adresses (13, 23) et à l'entrée de commande de lecture (15, 25) de la mémoire tampon d'émission, ou respectivement une deuxième adresse d'écriture (PADD) issue du processeur (2) et un deuxième signal de commande d'écriture (PWR) issu du processeur (2) à l'entrée d'adresses (13, 23) et à l'entrée de commande d'écriture (14, 24) de la mémoire tampon d'émission, selon l'état du signal de sélection de mémoire tampon d'émission (TRAMS), et
- des moyens de sélection de réception (70) pour transmettre respectivement ladite première adresse d'écriture (RADD) et ledit premier signal de commande d'écriture (TRRW) à l'entrée d'adresses (33, 43) et à l'entrée de commande d'écriture (34, 44) de la mémoire tampon de réception, ou respectivement une deuxième adresse de lecture (PADD) issue du processeur (2) et un deuxième signal de commande de lecture (PRD) issu du processeur (2) à l'entrée d'adresses (33, 43) et à l'entrée de commande de lecture (35, 45) de la mémoire tampon de réception, selon l'état du signal de sélection de mémoire tampon de réception (RRAMS).

10. Circuit d'interface conforme à la revendication 9, caractérisé en ce qu'il comprend deux mémoires tampon d'émission (10, 20) et deux mémoires tampon de réception (30, 40), chacune de ces mémoires tampon ayant une entrée de données en parallèle (11, 21, 31, 41), une sortie de données en parallèle (12, 22, 32, 42), une entrée d' adresses (13, 23, 33, 43), une entrée de commande d'écriture (14, 24, 34, 44) et une entrée de commande de lecture (15, 25, 35, 45), les sorties de données (32, 42) des mémoires tampon de réception et les entrées de données (11, 21) des mémoires tampon d'émission étant reliées au bus de données (4) du processeur, l'entrée parallèle (18) du registre de conversion parallèle/série (16) étant reliée aux sorties de données (12, 22) des deux mémoires tampon d'émission (10, 20), la sortie parallèle (38) du registre de conversion série/parallèle (36) étant reliée aux entrées de données (31, 41) des deux mémoires tampon de réception (30, 40), en ce que les moyens de sélection d'émission (60) sont agencés pour transmettre respectivement ladite première adresse de lecture (TADD) et ledit premier signal de commande de lecture (TRRW) à l'entrée d'adresses (13, 23) et à l'entrée de commande de lecture (15, 25) d'une des mémoires tampon d'émission sélectionnée en fonction du signal de sélection de mémoire tampon d'émission (TRAMS), et pour transmettre respectivement la deuxième adresse d'écriture (PADD) issue du processeur (2) et le deuxième signal de commande d'écriture (PWR) issu du processeur (2) à l'entrée d'adresses (13, 23) et à l'entrée de commande d'écriture (14, 24) de l'autre mémoire tampon d'émission, et en ce que les moyens de sélection de réception (70) sont agencés pour transmettre respectivement ladite première adresse d'écriture (RADD) et ledit premier signal de commande d'écriture (TRRW) à l'entrée d'adresses (33, 43) et à l'entrée de commande d'écriture (34, 44) d'une des mémoires tampon de réception sélectionnée en fonction du signal de sélection de mémoire tampon de réception (RRAMS), et pour transmettre respectivement la deuxième adresse de lecture (PADD) issue du processeur (2) et le deuxième signal de commande de lecture (PRD) issu du processeur (2) à l'entrée d'adresses (33, 43) et à l'entrée de commande de lecture (35, 45) de l'autre mémoire tampon de réception.

11. Circuit d'interface conforme à l'une des revendications 9 ou 10, caractérisé en ce que ledit premier signal de commande d'écriture et ledit premier signal de commande de lecture sont un seul et même signal (TRRW), et en ce que ladite première adresse d'écriture (RADD) est identique à ladite première adresse de lecture (TADD) décalée de sensiblement une demi-période du signal d'horloge (CLK).

12. Circuit d'interface conforme à la revendication 11, caractérisé en ce que les moyens de commande (80, 90) sont agencés pour modifier l'état du signal de sélection de mémoire tampon d'émission (TRAMS) lorsqu'un nombre de trames correspondant à la capacité d'une mémoire tampon d'émission (10, 20) ont été émises en série vers le dispositif périphérique (3) et pour modifier l'état du signal de sélection de mémoire tampon de réception (RRAMS) sensiblement une demi-période du signal d'horloge (CLK) après avoir modifié l'état du signal de sélection de mémoire tampon d'émission (TRAMS).

13. Circuit d'interface conforme à l'une des revendications 9 à 12, caractérisé en ce que ladite deuxième adresse d'écriture et ladite deuxième adresse de lecture sont une seule et même adresse (PADD) issue du processeur.

## Patentansprüche

1. Schnittstellenschaltung (1), verbunden mit einem Prozessor (2) zum Austausch serieller digitaler Daten mit einem peripheren Gerät (3), wobei die digitalen Daten in Form binärer, im Takt eines Zeitimpulses (CLK) gesendeter Einträge vorhanden sind, durch ein Synchronisationssignal (SYNC) markiert werden und jeweils mindestens ein Datenwort einschließen, dadurch gekennzeichnet, daß sie umfaßt:
- mindestens einen Pufferspeicher (10, 20; 30, 40) mit einem parallelen Dateneingang (11, 21; 31, 41), einem parallelen Datenausgang (12, 22; 32, 42), einem Adreßeingang (13, 23; 33, 43), einem Schreibsteuerungseingang (14, 24; 34, 44) und einem Lesesteuerungseingang (15, 25; 35, 45),
- eine erste Datenübertragungsleitung (26; 47), die mit dem Dateneingang (11, 21; 31, 41) des Pufferspeichers verbunden ist,
- eine zweite Datenübertragungsleitung (27; 46), die mit dem Datenausgang (12, 22; 32, 42) des Pufferspeichers verbunden ist,
- ein Konvertierungsregister (16; 36), das durch den Zeitimpuls (CLK) getaktet ist und einen seriellen Zugriff (17; 37) hat, der mit dem peripheren Gerät (3) verbunden werden kann, und einen parallelen Zugriff (18; 38), der mit einer (27; 47) der ersten und zweiten Datenübertragungsleitung verbunden ist, wobei die andere Datenübertragungsleitung (26; 46) mit einem Datenbus (4) des Prozessors (2) verbunden ist,
- Steuervorrichtungen (80, 90) umfassend einen Zähler (80), der den Zeitimpuls (CLK) und das Synchronisationssignal (SYNC) empfängt, um eine erste Adresse herzustellen (TADD; RADD), die im wesentlichen am Ende jedes seriell ausgetauschten Worts inkrementiert wird, ein erstes Speicherzugriffssteuersignal (TRRW), das im wesentlichen am Ende jedes seriell ausgetauschten Worts aktiviert wird, und ein Pufferspeicheransteuerungssignal (TRAMS; RRAMS), und
- Ansteuerungsvorrichtungen (60; 70) zur Übertragung jeweils der ersten Adresse (TADD; RADD) und des ersten Speicherzugriffssteuersignals (TRRW) an den Adreßeingang (13, 23; 33, 43) und an einen Steuereingang (15, 25; 34, 44) des Pufferspeichers oder jeweils einer von dem Prozessor (2) kommenden zweiten Adresse (PADD) und eines zweiten, von dem Prozessor (2) kommenden Speicherzugriffssteuersignals (PWR; PRD) an den Adreßeingang (13, 23; 33, 43) und an einen Steuereingang (14, 24; 35, 45) des Pufferspeichers, je nach Zustand des Pufferspeicheransteuerungssignals (TRAMS; RRAMS).

2. Schnittstellenschaltung nach Anspruch 1, dadurch gekennzeichnet, daß sie zwei Pufferspeicher (10, 20; 30, 40) mit jeweils einem parallelen Dateneingang (11, 21; 31, 41) umfaßt, der mit der ersten Datenübertragungsleitung (26; 47) verbunden ist, einem parallelen Datenausgang (12, 22; 32, 42), der mit der zweiten Datenübertragungsleitung (27; 46) verbunden ist, einem Adreßeingang (13, 23; 33, 43), einem Schreibsteuerungseingang (14, 24; 34, 44) und einem Lesesteuerungseingang (15, 25; 35, 45), und dadurch, daß die Ansteuerungsvorrichtungen (60; 70) so eingerichtet sind, daß sie jeweils die erste Adresse (TADD; RADD) und das erste Speicherzugriffssteuersignal (TRRW) an den Adreßeingang (13, 23; 33, 43) und an einen Steuereingang (15, 25; 34, 44) eines der in Abhängigkeit des Pufferspeicheransteuerungssignals (TRAMS; RRAMS) angesteuerten Pufferspeicher übertragen und jeweils die von dem Prozessor (2) kommende zweite Adresse (PADD) und das zweite von dem Prozessor (2) kommende Speicherzugriffssteuersignal (PWR; PRD) an den Adreßeingang (13; 23; 33, 43) und an einen Steuereingang (14, 24; 35, 45) des anderen Pufferspeichers übertragen.

3. Schnittstellenschaltung nach einem der Ansprüche 1 oder 2, dadurch gekennzeichnet, daß die Steuervorrichtungen (80, 90) so eingerichtet sind, daß sie den Zustand des Pufferspeicheransteuerungssignals (TRAMS; RRAMS) verändern können, wenn eine Anzahl Einträge, die der Kapazität eines Pufferspeichers (10, 20; 30, 40) entspricht, ausgetauscht wurde.

4. Schnittstellenschaltung nach Anspruch 3, dadurch gekennzeichnet, daß die Steuervorrichtungen (80, 90) ein von dem Prozessor (2) kommendes Freigabesignal (BSR) empfangen und so eingerichtet sind, daß sie die Zustandsänderung des Pufferspeicheransteuerungssignals (TRAMS; RRAMS) zulassen, wenn dieses Freigabesignal (BSR) sich in einem vorbestimmten Zustand befindet.

5. Schnittstellenschaltung nach einem der Ansprüche 3 oder 4, dadurch gekennzeichnet, daß die Steuervorrichtungen (80, 90) so eingerichtet sind, daß sie ein Datenübertragungsendesignal (TBE; RBF) an den Prozessor (2) adressieren können, und zwar im wesentlichen zur gleichen Zeit, zu der sie den Zustand des Pufferspeicheransteuerungssignals (TRAMS; RRAMS) ändern.

6. Schnittstellenschaltung nach einem der Ansprüche 1 bis 5, dadurch gekennzeichnet, daß sie Vorrichtungen (50) zum Erzeugen des Zeitimpulses (CLK) und des Synchronisationssignals (SYNC) von einem anderen, von dem Prozessor (2) kommenden Zeitimpuls (PCLK) höherer Frequenz aus umfaßt.

7. Schnittstellenschaltung nach einem der Ansprüche 1 bis 6 zum Senden von seriellen Daten von dem Prozessor (2) zu dem peripheren Gerät (3), dadurch gekennzeichnet, daß die zweite Datenübertragungsleitung (27) mit dem parallelen Zugriff (18) des Konvertierungsregisters (16) verbunden ist, wohingegen die erste Datenübertragungsleitung (26) mit dem Datenbus (4) des Prozessors verbunden ist, und dadurch, daß das erste Speicherzugriffssteuersignal (TRRW) selektiv durch die Ansteuerungsvorrichtungen (60) zum Lesesteuerungseingang (15, 25) des Pufferspeichers (10, 20) übertragen wird, sowie dadurch, daß das zweite Speicherzugriffssteuersignal (PWR) selektiv durch die Ansteuerungsvorrichtungen (60) zum Schreibsteuerungseingang (14, 24) des Pufferspeichers (10, 20) übertragen wird.

8. Schnittstellenschaltung nach einem der Ansprüche 1 bis 6 zum Empfang der von dem peripheren Gerät (3) seriell gesendeten Daten auf der Ebene des Prozessors (2), dadurch gekennzeichnet, daß die erste Datenübertragungsleitung (47) mit dem parallelen Zugriff (38) des Konvertierungsregisters (36) verbunden ist, während die zweite Datenübertragungsleitung (46) mit dem Datenbus (4) des Prozessors verbunden ist, und dadurch, daß das erste Speicherzugriffssteuersignal (TRRW) selektiv über die Ansteuerungsvorrichtungen (70) an den Schreibsteuerungseingang (34, 44) des Pufferspeichers (30, 40) übertragen wird, und daß das zweite Speicherzugriffssteuersignal (PRD) selektiv über die Ansteuerungsvorrichtungen (70) an den Lesesteuerungseingang (35, 45) des Pufferspeichers (30, 40) übertragen wird.

9. Schnittstellenschaltung (1), die mit einem Prozessor (2) für einen Zweirichtungsaustausch digitaler Daten zwischen dem Prozessor und einem peripheren Gerät (3) verbunden ist, wobei die Daten in Form binärer Einträge vorhanden sind, die im Takt eines Zeitimpulses (CLK) gesendet werden, durch ein Synchronisationssignal (SYNC) markiert werden und jeweils mindestens ein Datenwort einschließen, dadurch gekennzeichnet, daß sie umfaßt:
- mindestens einen Sendepufferspeicher (10, 20) und mindestens einen Empfangspufferspeicher (30, 40), wobei diese Pufferspeicher jeweils einen parallelen Dateneingang (11, 21, 31, 41), einen parallelen Datenausgang (12, 22, 32, 42), einen Adreßeingang (13, 23, 33, 43), einen Schreibsteuerungseingang (14, 24, 34, 44) und einen Lesesteuerungseingang (15, 25, 35, 45) aufweisen, wobei der Datenausgang (32, 42) des Empfangspufferspeichers und der Dateneingang (11, 21) des Sendepufferspeichers mit einem Datenbus (4) des Prozessors verbunden sind;
- ein paralleles/serielles Konvertierungsregister (16), das durch den Zeitimpuls (CLK) getaktet ist und einen seriellen Ausgang (17) hat, der mit dem peripheren Gerät (3) verbunden werden kann, und einen parallelen Eingang (18), der mit dem Datenausgang (12, 22) des Sendepufferspeichers verbunden ist,
- ein paralleles/serielles Konvertierungsregister (36), das durch den Zeitimpuls (CLK) getaktet ist und einen seriellen Eingang (37) hat, der mit dem peripheren Gerät (3) verbunden werden kann, und einen parallelen Ausgang (38), der mit dem Dateneingang (31, 41) des Empfangspufferspeichers verbunden ist,
- Steuervorrichtungen (80, 90) umfassend einen Zähler (80), der den Zeitimpuls (CLK) und das Synchronisationssignal (SYNC) empfängt, um eine erste Leseadresse (TADD) herzustellen, die im wesentlichen am Ende jedes seriell zum peripheren Gerät gesendeten Worts inkrementiert wird, ein erstes Lesesteuerungssignal (TRRW), das im wesentlichen am Ende jedes seriell zum peripheren Gerät gesendeten Worts aktiviert wird, eine erste Schreibadresse (RADD), die im wesentlichen am Ende jedes seriell von dem peripheren Gerät empfangenen Worts inkrementiert wird, ein erstes Schreibsteuerungssignal (TRRW), das im wesentlichen am Ende jedes seriell von dem peripheren Gerät empfangenen Worts aktiviert wird, und ein Sendepufferspeicheransteuerungssignal (TRAMS) und ein Empfangspufferspeicheransteuerungssignal (RRAMS),
- Sendeansteuerungsvorrichtungen (60) zur Übertragung jeweils der ersten Leseadresse (TADD) und des ersten Lesesteuerungssignals (TRRW) an den Adreßeingang (13, 23) und an den Lesesteuerungseingang (15, 25) des Sendepufferspeichers oder jeweils einer von dem Prozessor (2) kommenden zweiten Schreibadresse (PADD) und eines zweiten, von dem Prozessor (2) kommenden Schreibsteuerungssignals (PWR) an den Adreßeingang (13, 23) und an den Schreibsteuerungseingang (14, 24) des Sendepufferspeichers, entsprechend dem Zustand des Sendepufferspeicheransteuerungssignals (TRAMS), und
- Empfangsansteuerungsvorrichtungen (70) zur Übertragung jeweils dieser ersten Schreibadresse (RADD) und dieses ersten Schreibsteuerungssignals (TRRW) an den Adreßeingang (33, 43) und an den Schreibsteuerungseingang (34, 44) des Empfangspufferspeichers oder jeweils einer von dem Prozessor (2) kommenden zweiten Leseadresse (PADD) und eines zweiten, von dem Prozessor (2) kommenden Lesesteuerungssignals (PRD) an den Adreßeingang (33, 43) und an den Lesesteuerungseingang (35, 45) des Empfangspufferspeichers, entsprechend dem Zustand des Empfangspufferspeicheransteuerungssignals (RRAMS).

10. Schnittstellenschaltung nach Anspruch 9, dadurch gekennzeichnet, daß sie zwei Sendepufferspeicher (10, 20) und zwei Empfangspufferspeicher (30, 40) aufweist, die jeweils einen parallelen Dateneingang (11, 21, 31, 41), einen parallelen Datenausgang (12, 22, 32, 42), einen Adreßeingang (13, 23, 33, 43), einen Schreibsteuerungseingang (14, 24, 34, 44) und einen Lesesteuerungseingang (15, 25, 35, 45) umfassen, wobei die Datenausgänge (32, 42) der Empfangspufferspeicher und die Dateneingänge (11, 21) der Sendepufferspeicher mit dem Datenbus (4) des Prozessors verbunden sind und der parallele Eingang (18) des parallelen/seriellen Konvertierungsregisters (16) mit den Datenausgängen (12, 22) der beiden Sendepufferspeicher (10, 20) und der parallele Ausgang (38) des parallelen/seriellen Konvertierungsregisters (36) mit den Dateneingängen (31, 41) der beiden Empfangspufferspeicher (30, 40) verbunden ist, und dadurch, daß die Sendeansteuerungsvorrichtungen (60) so eingerichtet sind, daß sie jeweils die erste Leseadresse (TADD) und das erste Lesesteuerungssignal (TRRW) an den Adreßeingang (13, 23) und an den Lesesteuerungseingang (15, 25) eines der Sendepufferspeicher übertragen, der in Abhängigkeit von dem Sendepufferspeicheransteuerungssignal (TRAMS) angesteuert wurde, und jeweils die von dem Prozessor (2) kommende zweite Schreibadresse (PADD) und das zweite, von dem Prozessor (2) kommende Schreibsteuerungssignal (PWR) an den Adreßeingang (13, 23) und an den Schreibsteuerungseingang (14, 24) des anderen Sendepufferspeichers übertragen, sowie dadurch, daß die Empfangsansteuerungsvorrichtungen (70) so eingerichtet sind, daß sie jeweils die erste Schreibadresse (RADD) und das erste Schreibsteuerungssignal (TRRW) an den Adreßeingang (33, 43) und an den Schreibsteuerungseingang (34, 44) eines der Empfangspufferspeicher übertragen, der in Abhängigkeit von dem Empfangspufferspeicheransteuerungssignal (RRAMS) angesteuert wird, und jeweils die zweite, von dem Prozessor (2) kommende Leseadresse (PADD) und das von dem Prozessor (2) kommende zweite Lesesteuerungssignal (PRD) an den Adreßeingang (33, 43) und an den Lesesteuerungseingang (35, 45) des anderen Empfangspufferspeichers übertragen.

11. Schnittstellenschaltung nach einem der Ansprüche 9 oder 10, dadurch gekennzeichnet, daß das erste Schreibsteuerungssignal und das erste Lesesteuerungssignal ein und dasselbe Signal (TRRW) sind, und dadurch, daß die erste Schreibadresse (RADD) identisch mit der ersten Leseadresse (TADD) ist, die um im wesentlichen eine halbe Taktperiode des Zeitimpulses (CLK) versetzt ist.

12. Schnittstellenschaltung nach Anspruch 11, dadurch gekennzeichnet, daß die Steuervorrichtungen (80, 90) so eingerichtet sind, daß sie den Zustand des Sendepufferspeicheransteuerungssignals (TRAMS) verändern, wenn eine Anzahl Einträge, die der Kapazität eines Sendepufferspeichers (10, 20) entspricht, seriell zu dem peripheren Gerät (3) gesendet wurde, und daß sie den Zustand des Empfangspufferspeicheransteuerungssignals (RRAMS) im wesentlichen eine halbe Taktperiode des Zeitimpulses (CLK) verändern, nachdem sie den Zustand des Pufferspeicheransteuerungssignals (TRAMS) verändert haben.

13. Schnittstellenschaltung nach einem der Ansprüche 9 bis 12, dadurch gekennzeichnet, daß die zweite Schreibadresse und die zweite Leseadresse ein und dieselbe, von dem Prozessor stammende Adresse (PADD) sind.

## Claims

1. Interface circuit (1) associated with a processor (2) for exchanging digital data serially with a peripheral device (3), the digital data taking the form of binary frames transmitted at the rate of a clock signal (CLK), identified by a synchronisation signal (SYNC) and each including at least one data word, characterised in that it comprises
- at least one buffer memory (10, 20; 30, 40) having a parallel data input (11, 21; 31, 41), a parallel data output (12, 22; 32, 42), an address input (13, 23; 33, 43), a write command input (14, 24; 34, 44) and a read command input (15, 25; 35, 45),
- a first data transfer line (26; 47) connected to the data input (11, 21; 31, 41) of the buffer memory,
- a second data transfer line (27; 46) connected to the data output (12, 22; 32, 42) of the buffer memory,
- a conversion register (16; 36) timed by the clock signal (CLK) and having a serial access (17; 37) which is able to be connected to the peripheral device (3) and a parallel access (18; 38) connected to one (27; 47) of the said first and second data transfer lines, the other data transfer line (26; 46) being connected to a data bus (4) of the processor (2),
- control means (80, 90), including a counter (80) receiving the clock signal (CLK) and the synchronisation signal (SYNC), in order to produce a first address (TADD; RADD) incremented substantially at the end of each word exchanged serially, a first signal controlling access to memory (TRRW) activated substantially at the end of each word exchanged serially, and a buffer memory selection signal (TRAMS; RRAMS), and
- selection means (60; 70) for transmitting respectively the said first address (TADD; RADD) and the said first signal controlling access to memory (TRRW) to the address input (13, 23; 33, 43) and to a command input (15, 25; 34, 44) of the buffer memory, or respectively a second address (PADD) coming from the processor (2) and a second signal controlling access to memory (PWR; PRD) coming from the processor (2) to the address input (13, 23; 33, 43) and to a command input (14, 24; 35, 45) of the buffer memory, depending on the state of the buffer memory selection signal (TRAMS; RRAMS).

2. Interface circuit in accordance with Claim 1, characterised in that it comprises two buffer memories (10, 20; 30, 40), each having a parallel data input (11, 21; 31, 41) connected to the first data transfer line (26; 47), a parallel data output (12, 22; 32, 42) connected to the second data transfer line (27; 46), an address input (13, 23; 33, 43), a write command input (14, 24; 34, 44) and a read command input (15, 25; 35, 45), and in that the selection means (60; 70) are arranged so as to transmit respectively the said first address (TADD; RADD) and the said first signal controlling access to memory (TRRW) to the address input (13, 23; 33, 43) and to a command input (15, 25; 34, 44) of one of the buffer memories selected according to the buffer memory selection signal (TRAMS; RRAMS), and so as to transmit respectively the second address (PADD) coming from the processor (2) and the second signal controlling access to memory (PWR; PRD) coming from the processor (2) to the address input (13, 23; 33, 43) and to a command input (14, 24; 35, 45) of the other buffer memory.

3. Interface circuit in accordance with one of Claims 1 or 2, characterised in that the control means (80, 90) are arranged so as to modify the state of the buffer memory selection signal (TRAMS; RRAMS) when a number of frames corresponding to the capacity of a buffer memory (10, 20; 30, 40) have been exchanged.

4. Interface circuit in accordance with Claim 3, characterised in that the control means (80, 90) receive a validation signal (BSR) coming from the processor (2) and are arranged so as to allow modification of the state of the buffer memory selection signal (TRAMS; RRAMS) when this validation signal (BSR) is in a predetermined state.

5. Interface circuit in accordance with one of Claims 3 or 4, characterised in that the control means (80, 90) are arranged so as to send an end of transmission signal (TBE; RBF) to the processor (2) substantially at the same time as they modify the state of the buffer memory selection signal (TRAMS; RRAMS).

6. Interface circuit in accordance with one of Claims 1 to 5, characterised in that it comprises means (50) for generating the clock signal (CLK) and the synchronisation signal (SYNC) from another clock signal (PCLK) of higher frequency coming from the processor (2).

7. Interface circuit in accordance with one of Claims 1 to 6, for transmitting data serially from the processor (2) to the peripheral device (3), characterised in that the said second data transfer line (27) is connected to the parallel access (18) of the conversion register (16), whilst the said first data transfer line (26) is connected to the data bus (4) of the processor, in that the said first signal controlling access to memory (TRRW) is transmitted selectively by the selection means (60) to the read command input (15, 25) of the buffer memory (10, 20) and in that the said second signal controlling access to memory (PWR) is transmitted selectively by the selection means (60) to the write command input (14, 24) of the buffer memory (10, 20).

8. Interface circuit in accordance with one of Claims 1 to 6, for receiving, at the processor (2), data transmitted serially by the peripheral device (3), characterised in that the said first data transfer line (47) is connected to the parallel access (38) of the conversion register (36), whilst the said second data transfer line (46) is connected to the data bus (4) of the processor, in that the said first signal controlling access to memory (TRRW) is transmitted selectively by the selection means (70) to the write command input (34, 44) of the buffer memory (30, 40), and in that the said second signal controlling access to memory (PRD) is transmitted selectively by the selection means (70) to the read command input (35, 45) of the buffer memory (30, 40).

9. Interface circuit (1) associated with a processor (2) for a bidirectional exchange of digital data between the processor and a peripheral device (3), the data taking the form of binary frames transmitted at the rate of a clock signal (CLK), identified by a synchronisation signal (SYNC) and each including at least one least one data word, characterised in that it comprises:
- at least one transmission buffer memory (10, 20) and at least one reception buffer memory (30, 40), each of these buffer memories having a parallel data input (11, 21, 31, 41), a parallel data output (12, 22, 32, 42), an address input (13, 23; 33, 43), a write command input (14, 24, 34, 44) and a read command input (15, 25, 35, 45), the data output (32, 42) of the reception buffer memory and the data input (11, 21) of the transmission buffer memory being connected to a data bus (4) of the processor;
- a parallel/serial conversion register (16) timed by the clock signal (CLK) and having a serial output (17) able to be connected to the peripheral device (3) and a parallel input (18) connected to the data output (12, 22) of the transmission buffer memory,
- a serial/parallel conversion register (36) timed by the clock signal (CLK) and having a serial input (37) able to be connected to the peripheral device (3) and a parallel output (38) connected to the data input (31, 41) of the reception buffer memory,
- control means (80, 90), including a counter (80) receiving the clock signal (CLK) and the synchronisation signal (SYNC), in order to produce a first read address (TADD) incremented substantially at the end of each word transmitted serially to the peripheral device, a first read command signal (TRRW) activated substantially at the end of each word transmitted serially to the peripheral device, a first write address (RADD) incremented substantially at the end of each word received serially from the peripheral device, a first write command signal (TRRW) activated substantially at the end of each word received serially from the peripheral device, a transmission buffer memory selection signal (TRAMS) and a reception buffer memory selection signal (RRAMS),
- transmission selection means (60) for transmitting respectively the said first read address (TADD) and the said first read command signal (TRRW) to the address input (13, 23) and to the read command input (15, 25) of the transmission buffer memory, or respectively a second write address (PADD) coming from the processor (2) and a second write command signal (PWR) coming from the processor (2) to the address input (13, 23) and to the write command input (14, 24) of the transmission buffer memory, depending on the state of the transmission buffer memory selection signal (TRAMS), and
- reception selection means (70) for transmitting respectively the said first write address (RADD) and the said first write command signal (TRRW) to the address input (33, 43) and to the write command input (34, 44) of the reception buffer memory, or respectively a second read address (PADD) coming from the processor (2) and a second read command signal (PRD) coming from the processor (2) to the address input (33, 43) and to the read command input (35, 45) of the reception buffer memory, depending on the state of the reception buffer memory selection signal (RRAMS).

10. Interface circuit in accordance with Claim 9, characterised in that it comprises two transmission buffer memories (10, 20) and two reception buffer memories (30, 40), each of these buffer memories having a parallel data input (11, 21, 31, 41), a parallel data output (12, 22, 32, 42), an address input (13, 23, 33, 43), a write command input (14, 24, 34, 44) and a read command input (15, 25, 35, 45), the data outputs (32, 42) of the reception buffer memories and the data inputs (11, 21) of the transmission buffer memories being connected to the data bus (4) of the processor, the parallel input (18) of the parallel/serial conversion register (16) being connected to the data outputs (12, 22) of the two transmission buffer memories (10, 20), the parallel output (38) of the serial/parallel conversion register (36) being connected to the data inputs (31, 41) of the two reception buffer memories (30, 40), in that the transmission selection means (60) are arranged so as to transmit respectively the said first read address (TADD) and the said first read command signal (TRRW) to the address input (13, 23) and to the read command input (15, 25) of one of the transmission buffer memories selected according to the transmission buffer memory selection signal (TRAMS), and so as to transmit respectively the second write address (PADD) coming from the processor (2) and the second write command signal (PWR) coming from the processor (2) to the address input (13, 23) and to the write command input (14, 24) of the other transmission buffer memory, and in that the reception selection means (70) are arranged so as to transmit respectively the said first write address (RADD) and the said first write command signal (TRRW) to the address input (33, 43) and to the write command input (34, 44) of one of the reception buffer memories selected according to the reception buffer memory selection signal (RRAMS), and so as to transmit respectively the second read address (PADD) coming from the processor (2) and the second read command signal (PRD) coming from the processor (2) to the address input (33, 43) and to the read command input (35, 45) of the other reception buffer memory.

11. Interface circuit in accordance with one of Claims 9 or 10, characterised in that the said first write command signal and the said first read command signal are one and the same signal (TRRW), and in that the said first write address (RADD) is identical to the said first read address (TADD), offset by approximately one half-period of the clock signal (CLK).

12. Interface circuit in accordance with Claim 11, characterised in that the control means (80, 90) are arranged so as to modify the state of the transmission buffer memory selection signal (TRAMS) when a number of frames corresponding to the capacity of a transmission buffer memory (10, 20) have been transmitted serially to the peripheral device (3) and so as to modify the state of the reception buffer memory selection signal (RRAMS) by substantially one half-period of the clock signal (CLK) after having modified the state of the transmission buffer memory selection signal (TRAMS).

13. Interface circuit in accordance with one of Claims 9 to 12, characterised in that the said second write address and the said second read address are one and the same address (PADD) coming from the processor.
